# EUROPÄISCHE PATENTANMELDUNG

(11) **EP 2 338 718 A1**
(43) Veröffentlichungstag der Anmeldung: **29.06.2011**
(21) Anmeldenummer: 10015873.2
(22) Anmeldetag: 21.12.2010
(51) Int. Cl.: B60K 6/46

(54) **Wärmetauschsystem eines Flurförderzeugs**

(30) Priorität: 23.12.2009 DE 102009060601
(71) Anmelder: VOLK Fahrzeugbau GmbH, 88339 Bad Waldsee (DE)
(72) Erfinder: Baur, Matthias, 89075 Ulm (DE)
(74) Vertreter: Roth, Klaus

(57) **Zusammenfassung**

Es wird ein Flurförderzeug (2), insbesondere Elektro-Fahrersitz-Zugmaschine und/oder Elektro-Fahrersitz-Plattformwagen, mit wenigstens einer zumindest einen im Flurförderzeug fest verbauten elektrischen Antriebsmotor zum Antreiben wenigstens eines Laufrades umfassenden Elektro-Antriebseinheit des Flurförderzeugs und wenigstens einer modularen, austauschbaren Energiewandlereinheit (1), insbesondere einer Brennstoffzellen-Einheit oder einer Dieselmotor-Generator-Einheit, zur On-board-Erzeugung von elektrischem Strom zur Energieversorgung des Antriebsmotors und/oder zum Laden einer Traktionsbatterie, wobei die modulare, austauschbare Energiewandlereinheit wenigstens eine ein Kühlmedium und/oder ein Kühlelement umfassende Kühleinheit zur Kühlung der Energiewandlereinheit aufweist, wobei eine Nutzung der Verlustwärme der Energiewandlereinheit insbesondere zur Klimatisierung der Fahrerkabine möglich ist.

## Beschreibung

Die vorliegende Erfindung betrifft ein elektrisch angetriebenes Flurförderzeug, insbesondere Hybrid-Fahrersitz-Zugmaschine oder Elektro-Fahrersitz-Zugmaschine, nach dem Oberbegriff des Anspruchs 1.

### Stand der Technik

Auf Flughäfen werden Flurförderzeuge, insbesondere Fahrersitz-Zugmaschinen bzw. Fahrersitz-Plattformwagen, eingesetzt, um das Gepäck der Passagiere von den Gepäckabfertigungsbereichen zum Flugzeug bzw. in umgekehrter Richtung zu transportieren. Entsprechende Flurförderzeuge werden häufig im durchgängigen Mehrschichtbetrieb (365 Tage im Jahr, 24 Stunden am Tag) eingesetzt.

Ähnliche Einsatzbedingungen finden sich vielfach auch in der Industrie, z.B. in Automobil-, Stahl- oder Aluminiumwerken, wo vergleichbare Flurförderzeuge zum Verziehen schwerer Lasten wie z.B. Presswerkzeuge, Rohbauteile, Stahl- oder Aluminiumcoils etc. eingesetzt werden.

Für das Einsatzprofil derartiger Fahrzeuge sind zwei Merkmale kennzeichnend:
1. Häufig handelt es sich um einen gemischten Einsatz im Indoor- und Outdoorbereich, bei dem vor allem im Freien zum Teil sehr weite Strecken zurückzulegen sind. So müssen beispielsweise beim Einsatz auf einem Flughafen einerseits auf dem sogenannten Vorfeld sehr weite Strecken zwischen dem Terminalgebäude und den Parkpositionen der Flugzeuge zurückgeleat werden, während andererseits auch die Einfahrt in Gepäckabfertigungsbereiche im Inneren der Flughafengebaude erforderlich ist. Während letzteres beispielsweise mit einem verbrennungsmotorisch angetriebenen Flurförderzeug aus Emissionsgründen kaum möglich wäre, eignen sich reine Elektro-Flurförderzeuge aufgrund ihrer begrenzten Batteriekapazität nur eingeschränkt für die Bewältigung weiter Strecken im Freien.
2. Das Einsatzprofil ist weiterhin dadurch gekennzeichnet, dass entsprechende Flurförderzeuge zumeist im Kurzstreckenbetrieb eingesetzt werden. Die Bedienparsonen müssen das Fahrzeug häufig verlassen, um beispielsweise Gepäck- oder Cargoanhänger an- bzw. abzukuppeln. Dies hat zum einen zur Folge, dass bei kalter Witterung durch das häufige Öffnen und Schließen der Fahrertür regelmäßig warme Luft aus der Fahrerkabine entweicht. Zum anderen kommt es bei nasser Witterung über die Kleidung und das Schuhwerk der Bedienpersonen zu einem starken Feuchtigkeitseintrag in die Fahrerkabine, was ein Beschlagen der Fensterscheiben zur Folge haben kann. Im Winter wird dieser Effekt dadurch verstärkt, dass sich in den grobstolligen Profilen der obligatorischen Arbeitsschuhe Schnee sammelt, welcher dann in der Kabine schmilzt.

Die auf Flughäfen und in Industriebetrieben eingesetzten Flurförderzeuge, insbesondere Fahrersitz-Zugmaschinen und Fahrersitz-Plattformwagen, verfügen über spezifische Konstruktionsmerkmale, um diesen Bedingungen gerecht zu werden:
1. Nach dem heutigen Stand der Technik werden bei derartigen Einsatzfällen häufig Flurförderzeuge bzw. Fahrersitz-Zugmaschinen und Fahrersitz-Plattformwagen mit einem dieselelektrischen Antrieb eingesetzt. Bei diesen erzeugt während des Dieselbetriebs im Freien ein vom Dieselmotor angetriebener Generator Strom, der für den elektromotorischen Antrieb der Antriebsräder verwendet wird. Vorhandene Überschussleistung des Generators wird in die Traktionsbatterien des Flurförderzeugs eingespeist. Da die Batterien folglich im Dieselbetrieb fortlaufend wieder aufgeladen werden, ist z.B. bei flughafentypischen Einsatzbedingungen (ca. 70 bis 80 Prozent Einsatz im Freien mit Dieselbetrieb, ca. 20 bis 30 Prozent Verwendung in geschlossenen Gebäuden im rein elektrischen Fahrmodus) ein externes Aufladen der Batterien, z.B. in einer Batterieladestation, und/oder ein Wechseln der Batterien in der Regel nicht erforderlich.

Eine Hybrid-Fahrersitzzugmaschine der Anmelderin gemäß der EP 1329351 B1 bietet darüber hinaus den Vorteil, dass Dieselmotor und Generator Bestandteil einer modularen Einheit sind, die im Bedarfsfall schnell und einfach getauscht werden kann. Hierdurch können Servicearbeiten am vergleichsweise wartungsintensiven Dieselmotor von den Betriebszeiten der Zugmaschine entkoppelt werden, beispielsweise indem in einer Flotte von Fahrzeugen ein oder mehrere Ersatzmodule vorgehalten werden. Wartungs- und/oder reparaturbedingte Stillstandzeiten können dadurch reduziert werden.

Neben diesel-elektrisch angetriebenen Fahrzeugen wurden für den Einsatz auf Flughäfen und in Industrieanwendungen auch elektrisch angetriebene Fahrzeuge mit einer Brennstoffzelle vorgeschlagen. Die Brennstoffzelle fungiert hierbei als Energiewandler, um die in Brennstoffen, wie z.B. in Wasserstoff oder in zu reformierenden Kohlenwasserstoffen, gebundene chemische Energie in elektrischen Strom umzuwandeln, der zum Antrieb eines elektrischen Antriebsmotors und/oder zum Aufladen einer Batterie verwendet wird. Die Verwendung einer Brennstoffzelle als Energiewandler bietet unter anderem den Vorteil, dass entsprechende Fahrzeuge nicht nur innerhalb von Gebäuden, sondern auch im Freien schadstofffrei bzw. schadstoffarm betrieben werden können, was vor allem unter Umweltschutzgesichtspunkten vorteilhaft ist. So kann die Batterie auch während des Einsatzes in geschlossenen Gebäuden geladen werden, da die Brennstoffzelle hierbei nicht abgeschaltet werden muss.

Die Anmelderin hat gemäß der DE 10 2007 013 699 ein mobiles Traktionsbatterieladesystem für Flurförderzeuge, insbesondere Fahrersitz-Zugmaschinen und Fahrersitz-Plattformwagen vorgeschlagen. Dieses ist dadurch gekennzeichnet, dass Brennstoffzellen-Stack, Brennstofftank, ggf. Reformer etc. in einer modularen Einheit zusammengefasst sind, die schnell und ohne großen Aufwand getauscht werden kann - beispielsweise zu Wartungszwecken oder um mehrere Fahrzeuge mit einer gemeinsamen Traktionsbatterie-Ladeeinheit zu betreiben.
2. In Fahrzeugen entsprechend des Stands der Technik ist in der Regel eine leistungsfähige Heizungsanlage installiert, um ein angenehmes Raumklima und eine gute Sicht sicherzustellen. Hierbei kann beispielsweise die Verlustwärme des Dieselmotors oder der Brennstoffzelle für Heizzwecke genutzt werden. Ein Wärmetauscher entzieht hierbei einem zirkulierenden Kühlmedium des Dieselmotors oder der Brennstoffzelle die benötigte Wärmeenergie. Dadurch kann auf zusätzliche elektrische Heizelemente entweder gänzlich verzichtet werden oder diese können zumindest deutlich kleiner dimensioniert werden. In beiden Fällen kommt es zu einer Reduktion des Stromverbrauchs des Fahrzeugs.

Dies ist vorteilhaft, da hierdurch auch die verwendete Energiewandlereinheit, insbesondere Brennstoffzellen-Einheit oder Dieselmotor/Generator-Einheit, eine geringere Nominalleistung benötigt und entsprechend kleiner ausgeführt werden kann ("Downsizing"), was sich wiederum in geringeren Fertigungskosten niederschlägt. Zudem kann hierdurch auch ein geringerer Brennstoffverbrauch realisiert werden. Da Brennstoffkosten einen erheblichen Anteil zu den gesamten Betriebskosten eines derartigen Fahrzeugs beitragen, lässt sich so eine spürbare Reduzierung der Betriebskosten realisieren.

Um die Verlustwärme des Dieselmotors bzw. der Brennstoffzelle zum Heizen der Kabine zu nutzen, wird entsprechend des Stands der Technik einem zirkulierenden Kühlmedium des Dieselmotors bzw. der Brennstoffzelle mittels eines Wärmetauschers Wärme entzogen und beispielsweise mittels eines Gebläses in die Fahrerkabine hinein geblasen. Hierzu muss zumindest ein Teil des Kühlmediums aus dem Kühlkreislauf des Dieselmotors bzw. der Brennstoffzelle abgezweigt und zur Fahrerkabine geführt werden.

### Aufgabe und Vorteile der Erfindung

Aufgabe der vorliegenden Erfindung ist es, ein Elektro-Flurförderzeug, insbesondere Elektrv-Fahrersitz--Zugmaschine und/oder Elektro-Fahrersitz-Plattformwagen, mit wenigstens einem im Elektro--Flurförderzeug fest verbauten elektrischen Antriebsmotor zum Antreiben wenigstens eines Laufrades des Elektro-Flurförderzeugs und wenigstens einer modularen, schnell austauschbaren Energiewandlereinheit, insbesondere einer Brennstoffzellen-Einheit oder einer Dieselmotor/Generator-Einheit, zur On-board-Erzeugung von elektrischem Strom zur Energieversorgung des Antriebsmotors und/oder zum Laden einer Traktionsbatterie, vorzuschlagen, das die Nachteile des Stands der Technik vermeidet und/oder bei dem eine Nutzung der Verlustwärme der Energiewandlereinheit insbesondere zur Klimatisierung der Fahrerkabine möglich ist.

Diese Aufgabe wird durch ein Flurförderzeug gemäß Anspruch 1 gelöst. In den Unteransprüchen sowie in den nachfolgenden Darlegungen sind vorteilhafte Ausführungsformen und Weiterbildungen der Erfindung aufgeführt.

Erfindungsgemäß weist die Kühleinheit der modularen, austauschbaren Energiewandlereinheit wenigstens eine erste Wärme-Kontaktfläche zur Wärmeabgabe und die Elektro-Antriebseinheit wenigstens eine zweite Wärme-Kontaktfläche zur Wärmeaufnahme auf, wobei zumindest in einer Wärmeübertragungs-Phase Wärme des Kühlmediums und/oder des Kühlelements auf ein Heizmedium und/oder ein Heizelement einer Heizeinheit der Elektro-Antriebseinheit zu übertragen ist. So kann im Wesentlichen durch ein spezielles Wärmetausch-System gemäß der Erfindung erreicht werden, dass in vorteilhafter Weise durch Wärmeleitung mittels der Wärme-Kontaktflächen ein indirekter Austausch thermischer Energie insbesondere zwischen zwei geschlossenen und voneinander getrennten Wärmeträgermedien-Kreisläufen ermöglicht wird.

Folglich sind keine Fluidleitungen, insb. Kühlflüssigkeitsleitungen, zwischen Energiewandlereinheit und Elektro-Antriebseinheit bzw. Fahrerkabine oder dergleichen notwendig, die beispielsweise mittels Fluidanschlüsse, Kupplungen oder dergleichen verbunden bzw. getrennt werden können. Dies wäre von großem Nachteil, wenn die Brennstoffzellen-Einheit bzw. die Dieselmotor-Einheit gemäß der Erfindung als modulares und leicht austauschbares System ausgeführt ist. Denn in diesem Fall würden bei jedem Austauschvorgang der Energiewandlereinheit, insbesondere Brennstoffzellen-Einheit oder der Dieselmotor/Generator-Einheit, die Kühlmedienleitungsanschlüsse in der modularen Einheit von den entsprechenden Gegenstücken im Fahrzeug entkoppelt bzw. verkoppelt werden. Gerade bei häufigem Tauschen wäre dabei ein allmählicher Verlust des Wärmeträgermediums unvermeidbar.

Ein Kühlmedienverlust würde zu einer Überhitzung und resultierenden Folgeschäden, beispielsweise an der Brennstoffzelle oder dem Dieselmotor führen. Außerdem würde ein Kühlmedienverlust zu höherem Wartungsaufwand für das Auffüllen des Kühlmediums sowie zu entsprechenden Fahrzeugstillstandszeiten führen. In Abhängigkeit von der Temperatur des austretenden Kühlmediums könnte es außerdem zu einer Verletzung des Bedienpersonals kommen.

Vorzugsweise steht im montierten Zustand der modularen, austauschbaren Energiewandlereinheit die erste Wärme-Kontaktfläche in Wärme-Kontakt mit der zweiten Wärme-Kontaktfläche der Elektro-Antriebseinheit. Hiermit wird eine vorteilhafte Kopplung der Wärmequelle der Energiewandlereinheit mit der Wärme-Senke der Elektro-Antriebseinheit realisiert. Dementsprechend wird eine "trockene" Wärmeübertragung, d.h. "fluidfrei" bzw. "ohne Flüssigkeit", mittels einer vorteilhaften Wärmeleitung von Kontaktfläche auf Kontaktfläche verwirklicht. Somit werden auch Fluidverluste einschließlich der oben dargelegten negativen Folgen wirkungsvoll verhindert.

Vorteilhafterweise ist die Heizeinheit zur Heizung der Fahrerkabine und/oder eines den Fahrersitz umfassenden Fahrerbereichs ausgebildet. Die Fahrerkabine und/oder der Fahrersitz weisen vor allem in der kalten bzw. nassen Jahreszeit die größten Wärmebedarfe auf bzw. sind die größten Wärme-Senken in einem Flurförderzeug. Somit kann gemäß der Erfindung in vorteilhafter Weise die zum Teil erheblichen Abwärmemengen der Energiewandlereinheit, insbesondere des Verbrennungsmotors, für die Wärme-Senken der Elektro-Antriebseinheit verwendet werden.

In einer vorteilhaften Weiterbildung der Erfindung ist die Heizeinheit zur Heizung der Traktionsbatterie ausgebildet. Hierdurch kann alternativ oder in Kombination zur Beheizung der Fahrkabine bzw. des Fahrsitzes auch die Traktionsbatterie gemäß der Erfindung beheizt werden. Für die Funktionsweise bzw. die Leistungsabgabe ist eine vorteilhafte warme Betriebstemperatur von Batterien bzw. Akkumulatoren von wesentlicher Bedeutung. Gemäß dieser Variante der Erfindung kann die Traktionsbatterie/-Akku energetisch vorteilhaft bzw. schnell auch in kalten Jahreszeiten auf die entsprechende Betriebstemperatur erwärmt werden.

Beispielsweise ist die erste Wärme-Kontaktfläche der Energiewandlereinheit eine Außenfläche des Kühlelementes der Wärmequelle, z.B. des Verbrennungsmotors. Das Kühlelement ist vorzugsweise aus sehr gut Wärme leitendem Material wie Metall, insbesondere Aluminium oder Kupfer, hergestellt. Gegebenenfalls ist das Kühlelement Bestandteil der Wärmequelle bzw. fest an dieser fixiert, wobei eine vorteilhafte, insbesondere relativ großflächige Wärmeleitung von der Wärmequelle zur Wärme-Kontaktfläche realisiert ist.

In einer bevorzugten Ausführungsform der Erfindung umfasst die Kühleinheit einen geschlossenen, das Kühlmedium umfassenden Kühlkreis. Hier kann das Kühlelement ebenso Bestandteil der Wärmequelle bzw. fest an dieser fixiert sein, wobei eine vorteilhafte, insbesondere relativ großflächige Wärmeleitung von der Wärmequelle verwirklicht ist. So wird in vorteilhafter Weise die Wärme vom Kühlelement auf das Kühlmedium, insbesondere Kühlflüssigkeit, übertragen und mittels einer passiven oder mit Hilfe einer Pumpe oder dergleichen generierten, aktiven Fluidströmung zur ersten Wärme-Kontaktfläche der Energiewandlereinheit transportiert. Hier erfolgt dann der Wärmetausch zur zweiten Wärme-Kontaktfläche.

Vorzugsweise umfasst die Heizeinheit einen geschlossenen, das Heizmedium umfassenden Heizkreis. Diese Maßnahme ermöglicht eine besonders vorteilhafte Weiterleitung der übertragenen Wärmemengen z.B. mittels über eine zweite Pumpe generierte, aktive Strömung des Heizmediums bis hin zur Wärme-Senke der Elektro-Antriebeinheit.

Vorteilhafterweise weist der Kühlkreis die erste Wärme-Kontaktfläche und der Heizkreis die zweite Wärme-Kontaktfläche auf, wobei insbesondere die erste Wärme-Kontaktfläche des Kühlkreises und die zweite Wärme-Kontaktfläche des Heizkreises im Wesentlichen aus Metall wie z.B. Aluminium oder Kupfer bzw. entspr. Legierungen bestehen.

Vorzugsweise bilden die erste Wärme-Kontaktfläche des Kühlkreises und die zweite Wärme-Kontaktfläche des Heizkreises einen Formschluss aus. Hierdurch wird die Wärmeübertragung zwischen den beiden Kontaktflächen bzw. Wärmekreisen verbessert, so dass ein besonders hoher Wirkungsrad bzgl. der Wärmenutzung verwirklicht werden kann.

Zur weiteren Verbesserung der Wärmeübertragung kann eine möglichst große Kontaktfläche vorgesehen werden. So können u.a. die erste Wärme-Kontaktfläche des Kühlkreises und die zweite Wärme-Kontaktfläche des Heizkreises Oberflächen vergrößernde Strukturen aufweisen.

In einer besonderen Weiterbildung der Erfindung weisen die erste Wärme-Kontaktfläche des Kühlkreises und die zweite Wärme-Kontaktfläche des Heizkreises eine sich verjüngende und/oder konische Geometrie auf. Mit dieser Maßnahme wird ermöglicht, dass zum einen beim Anbringen bzw. Montieren der Energiewandlereinheit diese selbsttätig sich weitestgehend optimal platziert. Bei möglichst optimaler Platzierung der Energiewandlereinheit wird ein größtmöglicher Wirkungsgrad der Wärmeübertragung gewährleistet.

Zum andern wird mit der erfindungsgemäßen verjüngenden und/oder konischen Geometrie erreicht, dass die Energiewandlereinheit im montierten Zustand und während der Fahrt mittels dem hierdurch realisierten Formschluss vor einem Verrutschen bzw. Herunterfallen vom Fahrzeug gesichert ist.

Beispielsweise kann eine satteldachförmige, pyramidische, zick-zack-förmige, linsen- bzw. kreisbogenförmige Geometrie in vorteilhafter Weise verwendet werden. All diesen vorteilhaften Geometrien ist gemeinsam, dass diese eine Art "Selbstzentrierung" bzw. "Selbstpositionierung" der Energiewandlereinheit verwirklichen können und zudem durch einen vorteilhaften Formschluss ein Sichern während der Fahrt ermöglichen.

Die zuvor genannten Vorteile bzw. vorteilhaften Wirkungen werden vor allem dann konstruktiv besonders einfach unter Zuhilfenahme der Gewichtskraft realisiert, wenn z.B. die erste Wärme-Kontaktfläche des Kühlkreises und die zweite Wärme-Kontaktfläche des Heizkreises im montierten Zustand der modularen, austauschbaren Energiewandlereinheit wenigstens teilweise in vertikaler Richtung übereinander angeordnet sind.

In einer besonderen Ausführungsform der Erfindung bilden die erste Wärme-Kontaktfläche und die zweite Wärme-Kontaktfläche wenigstens zeitweise und/oder im montierten Zustand der modularen, austauschbaren Energiewandlereinheit einen trennbaren Wärmetauscher aus. Das heißt, dass nicht ein eine Baueinheit bildender Wärmetauscher vorgesehen ist, sondern dass gemäß der Erfindung der Wärmetauscher aus zwei separaten Komponenten besteht, die im Betrieb bzw. zur Wärmeübertragung/-leitung aneinander anliegend angeordnet und/oder verbunden sind.

Vorteilhafterweise weisen die erste Wärme-Kontaktfläche und/oder die zweite Wärme-Kontaktfläche des Heizkreises wenigstens eine verstellbare und/oder federnde Lagerung auf, wobei insbesondere die erste Lagerung der ersten Wärme-Kontaktfläche des Kühlkreises und/oder die zweite Lagerung der zweiten Wärme-Kontaktfläche des Heizkreises wenigstens ein Feder-Dämpfungselement aufweist.

### Ausführungsbeispiel

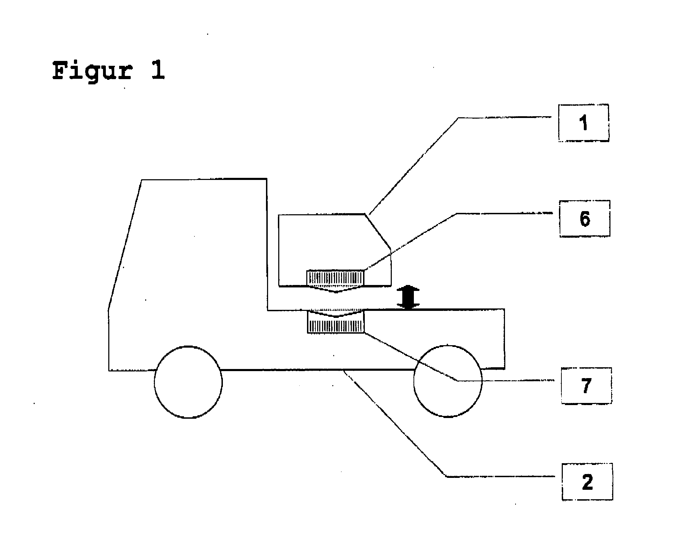

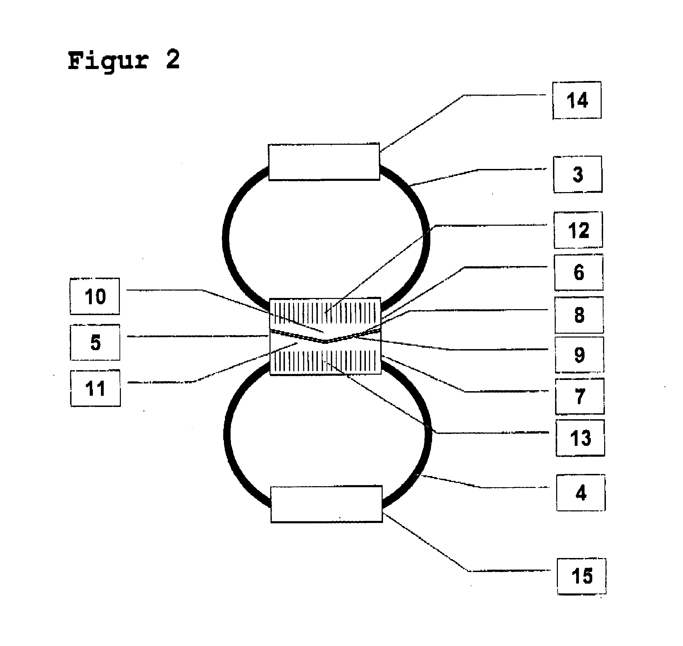

Ein Ausführungsbeispiel ist in der Zeichnung dargestellt und wird anhand der Figuren 1 und 2 näher erläutert, die einige wesentliche Komponenten der Erfindung aufführen.

Verlustwärme eines Energiewandlers 14, insbesondere die chemische Reaktionswärme einer Brennstoffzelle bzw. die chemische Reaktionswärme und Reibungswärme eines Dieselmotors, wird zunächst über ein in einem ersten Wärmeträgermedium-Kreislauf 3 zirkulierendes Kühlmedium, insbesondere durch Konvektion, abgeführt.

Der erste Wärmeträgermedium-Kreislauf 3 ist über ein erfindungsgemäßes Wärmetausch-System 5 mit einem zweiten Wärmeträgermedium-Kreislauf 4 verkoppelt, und zwar so, dass in vorteilhafter Weise zwischen beiden Kreisläufen ein indirekter Wärmeaustausch durch Wärmeleitung stattfindet. Im Ergebnis gibt der erste Wärmeträgermedium-Kreislauf 3 dabei thermische Energie ab, während der zweite Wärmeträgermedium-Kreislauf 4 thermische Energie aufnimmt.

Im zweiten Wärmeträgermedium-Kreislauf 4 befindet sich mindestens ein weiterer Wärmetauscher 15, mit welchem die Wärme des Wärmeträgermediums des zweiten Kreislaufs abgeführt wird. Die Abführung der Wärme erfolgt wahlweise nach außen (in die Fahrzeugumgebung) und/oder zu Heizzwecken nach innen (in die Fahrerkabine oder für eine Traktionsbatterie etc.).

Erfindungsgemäß ist die räumliche Anordnung der genannten Komponenten dadurch gekennzeichnet, dass sich der erste Wärmeträgermedium-Kreislauf 3 vollständig in der mobilen Energiewandlereinheit, insbesondere Brennstoffzelleneinheit oder Dieselmotor/Generator-Einheit 1 des Fahrzeugs befindet und der zweite Wärmeträgermedium-Kreislauf 4 zur Gänze im Flurförderzeug, insbesondere Fahrersitz-Zugmaschine bzw. Fahrersitz-Plattformwagen 2. Das Wärmetausch-System 5 befindet sich an der Schnittstelle von Flurförderzeug 2 und modularer Energiewandlereinheit 1, insbesondere Brennstoffzellen-Einheit oder Dieselmotor/Generator-Einheit, und bildet dabei zugleich die Schnittstelle zwischen den beiden Wärmeträgermedien-Kreisläufen 3 und 4.

Das Wärmetausch-System bzw. der Wärmetauscher gemäß der Erfindung besteht im Wesentlichen aus zwei voneinander getrennten bzw. trennbaren Elementen 6 und 7, die beide in vorteilhafter Weise als Hohlkörper ausgestaltet sind. Dabei ist das erste Element 6 in den energiewandlereinheitsseitigen Wärmeträgermedium-Kreislauf 3 integriert und das zweite Element 7 in den fahrzeugseitigen Wärmeträgermedium-Kreislauf 4. Die beiden Elemente 6 und 7 werden von den jeweiligen Wärmeträgermedien durchströmt, sind ansonsten aber nach außen hin abgeschlossen. Die Stoffströme in den Kreisläufen 3 und 4 sind also voneinander getrennt, so dass kein Stoffaustausch zwischen diesen stattfinden kann. Die Wärmeübertragung erfolgt also indirekt.

Die Kontaktfläche zwischen den Elementen 6 und 7 bilden zwei wärmedurchlässige Wandungen 8 und 9, von denen je eine zur energiewandlereinheitsseitigen Hälfte des Wärmetauscher-Systems 6 und zur fahrzeugseitigen Hälfte des WärmetauschSystems 7 gehört, und die bei aufgesetzter Energiewandlereinheit 1, insbesondere Brennstoffzellen-Einheit oder Dieselmotor/Generator-Einheit 1, aneinander anliegen, so dass eine möglichst großflächige Wärmeübertragung zwischen den beiden Wärmeträgermedien-Kreisläufen 3 und 4 erfolgen kann.

In einer vorteilhaften Variante der Erfindung sind die Wandungen 8 und 9 zur Außenseite hin als Profile 10 und 11 ausgebildet, welche geometrisch so gestaltet sind, dass sie jeweils als Gegenstücke zueinander fungieren, d.h. formschlüssig ineinander greifen. Hierdurch kann der Kontakt verbessert und zudem die Oberfläche an der Schnittstelle vergrößert werden, so dass eine besonders effiziente Wärmeübertragung möglich ist.

In einer weiteren vorteilhaften Variante der Erfindung, verjüngt sich eines der beiden Profile 10 und 11 zum anderen hin, z.B. durch eine konische, prismenförmige, trapezoide, halbzylindrische, kreisbogenförmige oder halbkugelförmige Ausgestaltung. Beim Aufsetzen auf das Gegenprofil erfolgt dadurch eine automatische Führung und zentrierung, wodurch ein optimaler Kontakt und eine besonders effiziente Wärmeübertragung ermöglicht werden.

In einer weiteren vorteilhaften Variante der Erfindung weist die Oberfläche wenigstens eines der beiden Profile 10 und 11 mehrere sich verjüngende Elemente, z.B. konische, prismenförmige, trapezoide, halbzylindrische und/oder halbkugelförmige Strukturen, auf. Diese Strukturen bzw. Rillen/Nuten oder dergleichen erstrecken sich in vorteilhafter Weise beispielsweise quer, insbesondere senkrecht zur beispielhaft in den Figuren dargestellten satteldachartigen Geometrie der Schnittstelle. bzw. Profile 10, 11.

In einer weiteren vorteilhaften Variante ist die räumliche Anordnung der Elemente 6 und 7 in der Energiewandlereinheit 1 bzw. im Flurförderzeug 2 so gestaltet, dass die Gewichtskraft der Traktionsbatterie-Ladeeinheit genutzt wird, um einen Anpressdruck zwischen den Wandungen 8 und 9 bzw. den Profilen 10 und 11 zu erzeugen. Dies bedeutet, dass die Wandungen 8 und 9 bzw. die Profile 10 und 11 in vertikaler Richtung im Wesentlichen über- bzw. untereinander angeordnet sind. Hierdurch kann der Kontakt verbessert werden, so dass eine besonders effiziente Wärmeübertragung möglich ist.

In einer besonders vorteilhaften Variante ragt die Wandung 8 bzw. das Profil 10 nicht wie in den Figuren schematisch dargestellt über die Außenkontur der Energiewandler-Einheit 1 hinaus, sondern bildet z.B. eine vorteilhafte Vertiefung bzw. Ausnehmung der Energiewandler-Einheit 1 bzw. das "weibliche" Element der Schnittstelle. Dadurch ergeben sich beispielsweise dann Vorteile, wenn die Wandungen 8 und 9 bzw. die Profile 10 und 11 in vertikaler Richtung im Wesentlichen übereinander angeordnet sind. In diesem Fall kann die modulare Energiewandler-Einheit 1 im abgenommenen Zustand, beispielsweise zur Wartung in einer Werkstatt, problemlos auf dem Boden aufgesetzt werden.

Die Bedingung, dass die Wandung 8 bzw. das Profil 9 nicht, bzw. nicht wesentlich über die Außenkontur der Energiewandler-Einheit 1 hinausragt, lässt sich besonders einfach realisieren, wenn sich das fahrzeugseitige Profil 11 zum energiewandlereinheitsseitigen Profil 10 hin verjüngt, wenn also das fahrzeugseitige Profil 11 als "männliches" Profil und das energiewandlereinheitsseitige Profil 10 als "weibliches" Profil ausgestaltet sind.

Für den Fall, dass die Wandung 8 und 9 bzw. die Profile 10 und 11 in vertikaler Richtung im Wesentlichen übereinander angeordnet sind, sollte das Fahrzeug 2 in vorteilhafter Weise über wenigstens einen weiteren Auflagepunkt bzw. wenigstens eine weitere Auflagefläche für die Energiewandler-Einheit 1 verfügen. Diese sollten so positioniert bzw. gestaltet sein, dass sie nur bzw. überwiegend dynamische Belastungen (d.h. Kippmomente) aufnehmen, während die statische Gewichtskraft der Energiewandler-Einheit ganz bzw. überwiegend vom fahrzeugseitigen Profil 11 aufgenommen wird. Dadurch kann die Gewichtskraft der Energiewandler-Einheit 1 genutzt werden, um einen Anpressdruck zwischen den Wandungen 8 und 9 bzw. den Profilen 10 und 11 zu erzeugen.

Erfindungsgemäß lässt sich dies beispielsweise dadurch realisieren, dass der in vertikaler Richtung gemessene geringste Abstand zwischen den Profilen 10 und 11 kleiner ist, als der in vertikaler Richtung gemessene geringste Abstand zwischen den Aufnahmepunkten bzw. Auflageflächen im Fahrzeug und den entsprechenden Gegenpunkten bzw. Gegenflächen in der Energiewandler-Einheit 1. In einer vorteilhaften Variante sollte die Differenz zwischen beiden Abständen sehr gering sein.

Vorzugsweise können zusätzliche Sicherungen bzw. Fixierungen wie Schraubverbindungen zwischen Energiewandler-Einheit 1 und Fahrzeug 2 vorgesehen werden, um ein Herunterfallen der Energiewandler-Einheit 1 im Fahrbetrieb sicher zu verhindern.

In einer weiteren, ganz besonders vorteilhaften Variante, sollte zwischen den Auflagepunkten bzw. Auflageflächen im Fahrzeug und/oder den entsprechenden Gegenpunkten bzw. Gegenflächen in der Energiewandler-Einheit 1 mindestens ein elastisches Element eingebracht werden, beispielsweise ein Gummielement, eine Feder oder ein Stoßdämpfer. Dadurch kann gewährleistet werden, dass beim Auftreten von dynamischen Lasten eine Stabilisierung erfolgt, die statische Gewichtskraft der Energiewandler-Einheit 1 aber vollständig bzw. im Wesentlichen auf dem fahrzeugseitigen Profil 11 lastet.

Alternativ oder in Kombination zur zuvor genannten dynamischen Stabilisierung bzw. Lagerung der Energiewandlereinheit kann auch eine dynamische Lagerung der Kontaktflächen bzw. Wärmeübertragungselemente des erfindungsgemäßen WärmetauschSystems 5 vorgesehen werden. Beispielsweise können die Kontaktflächen umfassenden Profile 12 und 13 federnd bzw. verstellbar gelagert werden, so dass eine Anpassung beim Montieren der Energiewandlereinheit 1 in vorteilhafter Weise erfolgen kann. Gegebenenfalls sind die Profile 12 und 13 mittels flexibler Schläuche oder Rohre etc. in die Wärme-Kreisläufe 3 und 4 eingebunden, um eine gewisse Beweglichkeit der Profile 12 und 13 in vorteilhafter Weise zu ermöglichen.

In einer weiteren vorteilhaften Variante kann an der Energiewandler-Einheit 1 wenigstens ein Fuß oder eine Stütze vorgesehen sein, der/die ausziehbar und/oder ausklappbar ist, so dass die modulare Energiewandler-Einheit 1 in abgenommenen Zustand auch dann problemlos auf dem Boden aufgestellt werden kann, wenn wie in den Figuren beispielhaft und schematisch dargestellt die Wandung 8 bzw. das Profil 10 aus der Außenkontur der Energiewandlereinheit hinausragt.

Um im energiewandlereinheitsseitigen Wärmeträgermedium-Kreislauf 3 eine möglichst effiziente Wärmeabgabe vom Wärmeträgermedium an die Wandung 8 zu ermöglichen, sollte die Wandung 8 in einer vorteilhaften Variante der Erfindung auch zur Innenseite hin, also in dem durch das Wärmeträgermedium durchströmten Bereich, als Profil 12 ausgebildet sein.

In einer vorteilhaften Ausführungsform der Erfindung ragt das Profil 12 rippen- oder lamellenartig in den vom Wärmeträgermedium durchflossenen Hohlkörper 6 hinein, so dass es zu einer Maximierung der mit dem Wärmeträgermedium in Kontakt stehenden Oberfläche kommt.

In einer besonderen Weiterbildung verlaufen die Rippen bzw. Lamellen des Profils 12 im Wesentlichen längs zur Flussrichtung des Wärmeträgermediums.

In einer weiteren vorteilhaften Variante der Erfindung ist das Profil so gestaltet, dass bei dessen Durchströmung eine sogenannte turbulente Strömung des Wärmeträgermediums entsteht, welche für die Wärmeübertragung besonders günstig ist.

Um im fahrzeugseitigen Wärmeträgermedium-Kreislauf 4 eine möglichst effiziente Wärmeabgabe von der Wandung 9 an das Wärmeträgermedium zu ermöglichen, sollte die Wandung 9 auch zur Innenseite hin, also in dem durch das Wärmeträgermedium durchströmten Bereich, als Profil 13 ausgebildet sein.

In einer vorteilhaften Variante der Erfindung ragt das fahrzeugseitige Profil 13 rippen- oder lamellenartig in den vom Wärmeträgermedium durchflossenen Hohlkörper 7 hinein, so dass es zu einer Maximierung der mit dem Wärmeträgermedium in Kontakt stehenden Oberfläche kommt.

In einer weiteren vorteilhaften Ausführung verlaufen die Rippen bzw. Lamellen des fahrzeugseitigen Profils 13 im Wesentlichen längs zur Flussrichtung des Wärmeträgermediums.

In einer bevorzugten Variante der Erfindung ist das fahrzeugseitige Profil so gestaltet, dass bei dessen Durchströmung eine sogenannte turbulente Strömung des Wärmeträgermediums entsteht, welche für die Wärmeübertragung besonders günstig ist.

In einer weiteren vorteilhaften Weiterbildung der Erfindung sind die beiden Wände 8 und 9 bzw. die Profile 10 und 11 bzw. 12 und 13 aus einem Material mit hoher Wärmeleitfähigkeit, wie z.B. Aluminium oder Kupfer, gefertigt.

In einer weiteren vorteilhaften Variante ist die Zirkulationsrichtung der beiden Wärmeträgermedium-Kreisläufe 3 und 4 gegenläufig, so dass es zu einer sogenannten Gegenstromkühlung kommt, welche für die Wärmeübertragung besonders vorteilhaft ist.

Obgleich in den bisherigen Ausführungen bei der Beschreibung des erfindungsgemäßen Wärmetauschsystems zur Vereinfachung stets.der Singular gewählt wurde, ist es ebenso denkbar, dass in einem Flurförderzeug, insb. Fahrersitz-Zugmaschine oder Fahrersitz-Plattformwagen, mehrere erfindungsgemäße Wärmetausch-Systeme installiert sind. Dies ist insbesondere dann vorteilhaft, wenn neben der Abwärme eines Energiewandlers, insbesondere einer Brennstoffzellen-Einheit oder einer Dieselmotor/Generator-Einheit, auch die Verlustwärme weiterer Komponenten der modularen Energiewandlereinheit genutzt werden sollen. So könnte in einer vorteilhaften Weiterbildung der Erfindung beispielsweise auch die Abwärme des Abgassystems eines Dieselmotors und/oder die Abwärme eines AC-Inverters eines Drehstrom-Asynchrongenerators und/oder die Abwärme eines DC/DC-Wandlers in einer Brennstoffzellen-Einheit etc. gemäß der Erfindung genutzt werden.

Insbesondere in den zuletzt genannten Fällen wäre es denkbar, das energiewandlereinheitsseitige Element 6 - bei ansonsten im Wesentlichen unveränderter geometrischer Gestalt - nicht als Hohlkörper, sondern als Festkörper auszuführen. Die energiewandlereinheitsseitigen Elemente 6 könnten in diesem Fall direkt mit den jeweiligen Verlustwärme erzeugenden Komponenten verbunden werden, so dass die Wärmeübertragung auf das Element 6 nicht durch ein zirkulierendes Wärmeträgermedium bzw. durch Konvektion, sondern in vorteilhafter Weise durch Wärmeleistung erfolgt.

Bei entsprechender geometrischer Gestaltung der Verlustwärme erzeugenden Komponenten könnte ggf. auf ein separates energiewandlereinheitsseitiges Element 6 sogar völlig verzichtet werden. Die entsprechenden Verlustwärme erzeugenden Komponenten würden in diesem Fall direkt auf den fahrzeugseitigen Elementen 7 aufliegen.

Wird die Abwärme mehrerer Verlustwärme erzeugender Komponenten genutzt, so sollte deren Ankoppelung bzw. Verschaltung an den fahrzeugseitigen Wärmeträgermedienkreislauf 4 in vorteilhafter Weise so gestaltet sein, dass sich die Reihenfolge an den durchschnittlich erreichten Verlusttemperaturen orientiert. Eine besonders effiziente Nutzung der Verlustwärme kann erzielt werden, wenn die Verlusttemperaturen entlang der Fließrichtung des Wärmeträgermedium-Kreislaufs 4 zunehmen.

Grundsätzlich ist denkbar, dass vor allem bei der Verwendung von Wärmequellen wie bereits handelsüblichen Dieselmotoren oder Brennstoffzellen, die zum Teil bereits ein eigenes bzw. herkömmliches Kühlsystem bzw. Kühlung umfassen, die vorliegende erfindungsgemäße Kühlung bzw. Wärmeübertragung gemäß der Erfindung alternativ oder in Kombination erfolgen kann. Beispielsweise kann vor allem in der kalten Jahreszeit oder in besonderen Betriebsfällen die Kühlung der Wärmequellen der Energiewandlereinheit und somit die Beheizung der Heizeinheit der Elektro-Antriebseinheit, insb. der Fahrerkabine bzw. des Fahrersitzes etc., zum Teil oder im Wesentlichen bzw. vollständig gemäß der Erfindung erfolgen. Dagegen kann z.B. in der warmen Jahreszeit oder in Betriebsfällen mit besonders großem Abwärmeanfall der Energiewandlereinheit, insbesondere des Dieselmotors oder der Brennstoffzelle, mittels herkömmlicher bzw. bereits handelsüblicher Kühler dieser Komponenten die überschüssige Wärme abtransportiert werden.

## Patentansprüche

1. Flurförderzeug, insbesondere Elektro-Fahrersitz-Zugmaschine und/oder Elektro-Fahrersitz-Plattformwagen, mit wenigstens einer zumindest einen im Flurförderzeug fest verbauten elektrischen Antriebsmotor zum Antreiben wenigstens eines Laufrades umfassenden Elektro-Antriebseinheit des Flurförderzeugs und wenigstens einer modularen, austauschbaren Energiewandlereinheit, insbesondere einer Brennstoffzellen-Einheit oder einer Dieselmotor-Generator-Einheit, zur On-board-Erzeugung von elektrischem Strom zur Energieversorgung des Antriebsmotors und/oder zum Laden einer Traktionsbatterie, wobei die Elektro-Antriebseinheit wenigstens einen Fahrersitz und/oder Fahrkabine umfasst, so dass die Elektro-Antriebseinheit als Elektro-Flurförderzeug ausbildbar ist, wobei die modulare, austauschbare Energiewandlereinheit wenigstens eine ein Kühlmedium und/oder ein Kühlelement umfassende Kühleinheit zur Kühlung der Energiewandlereinheit aufweist, **dadurch gekennzeichnet, dass** die Kühleinheit der modularen, austauschbaren Energiewandlereinheit wenigstens eine erste Wärme-Kontaktfläche zur Wärmeabgabe und die Elektro-Antriebseinheit wenigstens eine zweite Wärme-Kontaktfläche zur Wärmeaufnahme aufweist, wobei zumindest in einer Wärmeübertragungs-Phase Wärme des Kühlmediums und/oder des Kühlelements auf ein Heizmedium und/oder ein Heizelement einer Heizeinheit der Elektro-Antriebseinheit zu übertragen ist.

2. Flurförderzeug nach Anspruch 1, **dadurch gekennzeichnet, dass** die Kühleinheit einen geschlossenen, das Kühlmedium umfassenden Kühlkreis umfasst.

3. Flurförderzeug nach einem der vorgenannten Ansprüche, **dadurch gekennzeichnet, dass** die Heizeinheit einen geschlossenen, das Heizmedium umfassenden Heizkreis umfasst.

4. Flurförderzeug nach einem der vorgenannten Ansprüche, **dadurch gekennzeichnet, dass** der Kühlkreis die erste Wärme-Kontaktfläche und der Heizkreis die zweite Wärme-Kontaktfläche aufweist.

5. Flurförderzeug nach einem der vorgenannten Ansprüche, **dadurch gekennzeichnet, dass** die erste Wärme-Kontaktfläche des Kühlkreises und die zweite Wärme-Kontaktfläche des Heizkreises einen Formschluss ausbilden.

6. Flurförderzeug nach einem der vorgenannten Ansprüche, **dadurch gekennzeichnet., dass** die erste Wärme-Kontaktfläche des Kühlkreises und die zweite Wärme-Kontaktfläche des Heizkreises Oberflächen vergrößernde Strukturen aufweisen.

7. Flurförderzeug nach einem der vorgenannten Ansprüche, **dadurch gekennzeichnet, dass** die erste Wärme-Kontaktfläche des Kühlkreises und die zweite Wärme-Kontaktfläche des Heizkreises eine sich verjüngende und/oder konische Geometrie aufweisen.

8. Flurförderzeug nach einem der vorgenannten Ansprüche, **dadurch gekennzeichnet, dass** die erste Wärme-Kontaktfläche des Kühlkreises und die zweite Wärme-Kontaktfläche des Heizkreises im montierten Zustand der modularen, austauschbaren Energiewandlereinheit wenigstens teilweise in vertikaler Richtung übereinander angeordnet sind.

9. Flurförderzeug nach einem der vorgenannten Ansprüche, **dadurch gekennzeichnet, dass** die erste Wärme-Kontaktfläche und die zweite Wärme-Kontaktfläche wenigstens zeitweise und/oder im montierten Zustand der modularen, austauschbaren Energiewandlereinheit einen trennbaren Wärmetauscher ausbilden.

10. Flurförderzeug nach einem der vorgenannten Ansprüche, **dadurch gekennzeichnet, dass** die erste Wärme-Kontaktfläche und/oder die zweite Wärme-Kontaktfläche des Heizkreises wenigstens eine verstellbare und/oder federnde Lagerung aufweisen.
